(19) Europäisches Patentamt
European Patent Office
Office européen des brevets

(11) **EP 2 169 797 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(21) Anmeldenummer: **09171814.8**

(22) Anmeldetag: **30.09.2009**

(51) Int Cl.:
*H02H 1/00* *(2006.01)*      *H02H 7/10* *(2006.01)*
*H02H 7/12* *(2006.01)*

(54) **VERFAHREN UND MESSVORRICHTUNG ZUR MESSUNG EINES AUSGANGSSTROMS EINER GETAKTETEN HALBBRUECKENSCHALTUNG**

METHOD AND MEASURING DEVICE FOR MEASURING AN OUTPUT CURRENT OF A METERED HALF BRIDGE CIRCUIT

MÉTHODE ET DISPOSITIF DE MESURE DU COURANT DE SORTIE D'UN CIRCUIT EN PONT CONTRÔLÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.09.2008 DE 102008049781**

(43) Veröffentlichungstag der Anmeldung:
**31.03.2010 Patentblatt 2010/13**

(73) Patentinhaber: **Lenze Automation GmbH
40667 Meerbusch (DE)**

(72) Erfinder: **Petersen, Thomas
38104 Braunschweig (DE)**

(74) Vertreter: **Leonhard, Frank Reimund
Leonhard & Partner
Patentanwälte
Postfach 10 09 62
80083 München (DE)**

(56) Entgegenhaltungen:
**US-A- 4 870 527      US-A1- 2008 048 645**

## Beschreibung

Die Erfindung bezieht sich auf eine Messvorrichtung zur Messung des Ausgangsstroms einer getakteten Halbbrückenschaltung (Anspruch 7) und ein Verfahren, welches mit dieser Messvorrichtung arbeiten kann (Anspruch 1), und eine weitere Messvorrichtung (Anspruch 15).

Zur Verlustleistungsreduzierung eines Stellgliedes kann eine gewünschte Ausgangsgröße durch Pulsen gestellt werden, anstatt sie kontinuierlich zu verändern.

Bei einem Spannungswechselrichter als Stellglied wird hierbei die Ausgangsspannung zwischen verschiedenen annähernd konstanten Potenzialen geschaltet. Die Anzahl der Potenziale, zwischen denen geschaltet wird, beträgt mindestens zwei. In erster Näherung ergibt sich durch das zeitliche Verhältnis und die geschalteten Potenziale im Mittel die gewünschte Ausgangsspannung. Das Schalten zwischen unterschiedlichen Potenzialen ist mit Änderungen der Spannung pro Zeit verbunden. Diese Spannungswechsel pro Zeit liegen bei heutigen Spannungswechselrichtern im Bereich von mehreren kV pro Mikrosekunde.

Strommessvorrichtungen, die eine potenzialfreie Messung eines Gleich- und Wechselstroms ermöglichen, sind beispielsweise berührungslose Stromwandler, die das Magnetfeld des Messstroms sensieren und dessen Stärke in elektrische Signale umwandeln.

Aufgrund der mit dem Stellglied verbundenen Last ergibt sich ein Strom. Die verwendeten Lasten, z.B. Motoren, haben in der Regel ein angenähert ohmschinduktives Verhalten. Durch diese Eigenschaft ergeben sich geglättete Stromverläufe. Für viele Anwendungen ist die Kenntnis des oder der fließenden Ströme erwünscht, da hiermit auf den Zustand der Last geschlossen werden und diese Information nutzbringend für eine Regelung verwendet werden kann. Zu diesem Zweck existieren verschiedene Ausführungen von Strommessungen, die sich bezüglich der Eignung für Gleich- oder Wechselstrom und galvanischer Trennung unterscheiden.

Häufig wird Stromsensorik auf der Basis der Magnetfeldsensierung eingesetzt. Dieses Prinzip ermöglicht das galvanisch getrennte Messen von Strömen. Jeder von einem Strom durchflossene Leiter erzeugt ein Magnetfeld, dass in einem magnetischen Kreis geführt werden kann. Durch Veränderung der Windungszahlen des stromführenden Leiters um den magnetischen Kreis kann das Feld verstärkt werden. Durch konstruktive Lösungen lassen sich Differenz-Strommessungen durchführen.

In einem Luftspalt kann ein magnetisches Feld gemessen werden. Dazu wird ein Hall-Element benutzt. Bei der Versorgung mit einem konstanten Strom durch die Auswerte-Elektronik hat es die Eigenschaft, den magnetischen Fluss in eine Spannung umzuwandeln. Beim Open-loop Verfahren wird dieses korrelierte Signal als Repräsentation des Messstroms verwendet. Beim Closed-loop Verfahren wird das vom Hall-Element sensierte Signal verwendet, um mittels eines Sekundärstromkreises das im magnetischen Kreis vorhandene Magnetfeld zu kompensieren. Der notwendige Strom im Sekundärkreis ist damit mit dem Messstrom korreliert.

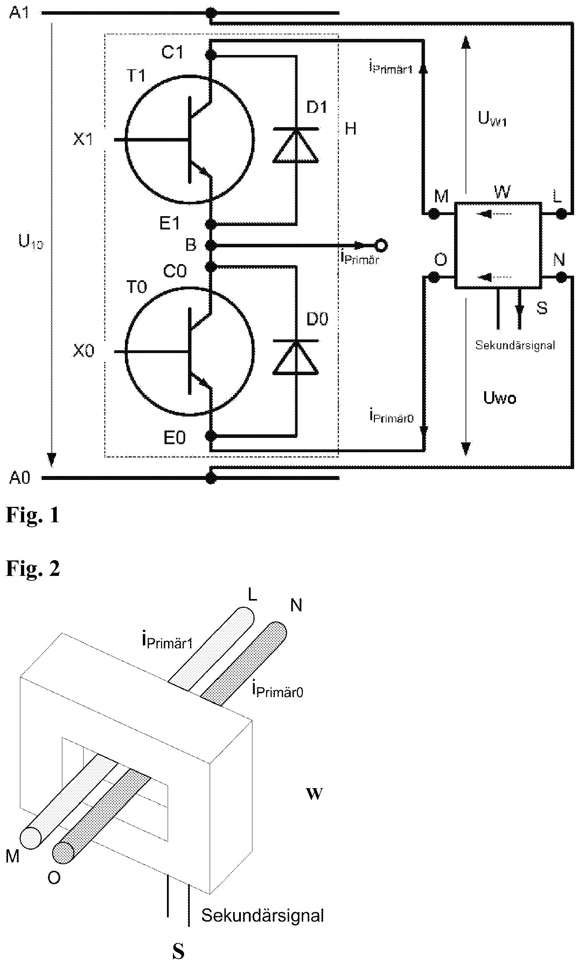

US 4,870,527 (Emerson, Zaleski) veröffentlicht eine Vorrichtung und ein Verfahren zum Erkennen eines Erdschlusses, vgl. dort Spalte 1, Zeilen 8 bis 17. Es werden drei Schaltungen vorgestellt, die in den dortigen Figuren 1 bis 3 jeweils einen Sensor besitzen, der zwischen dem Zwischenkreis und dem Wechselrichter angeordnet ist und dabei entweder die Zuleitung, die Rückleitung vom Wechselrichter, oder beide Leitungen verwendet. Erkannt wird mit dieser Schaltung ein Erdschluss in einer der Anschlussleitungen der Last, wobei sich die Potentiale an dem Sensor, dort 18, 22 und 26 als die Zwischenkreispotentiale darstellen, welche keine Spannungstransienten oder keine starken Schwankungen aufweisen, aber mit dieser Schaltung wird nicht der Ausgangsstrom für die (in der) Last gemessen, vielmehr ein Fehlerstrom, der zuverlässig erkannt werden soll und der dort für den rechten unteren Schalter der rechten Halbbrücke in zwei Richtungen (positiv und negativ) eingezeichnet ist, jeweils **mit Erdschluss** zur dort vorgesehenen Masse/Erde (dort Bezugzeichen 20).

Ein zwischen Stellglied und Last fließender Strom (Primärstrom) kann in ein galvanisch getrenntes und korreliertes Signal abgebildet werden (Sekundärsignal). Das Sekundärsignal des Stromwandlers kann beispielweise ebenfalls ein Stromsignal sein. Ein elektrisches Bauteil, welches eine galvanische Trennung zwischen einem Primär- und einem Sekundärstromkreis aufweist, besitzt indes eine kapazitive Kopplung zwischen den getrennten Stromkreisen.

Ergeben sich zwischen Primär- und Sekundärstromkreis des Wandlers hohe Spannungswechsel, wird die Funktion des Wandlers und damit das Sekundärsignal durch diese kapazitive Kopplung gestört. Hiermit wird die Korrelation zwischen Primär- und Sekundärsignal beeinträchtigt und in der Konsequenz die Kenntnis über den elektrischen Zustand der Last verschlechtert.

Es ist weiter bekannt, dass bei einem Spannungswechselrichter mit zwei oder mehreren Potenzialen, zwischen denen geschaltet wird, die Messung des zur Last fließenden Stroms in dem zur Last führenden Leiter durchgeführt werden kann. Vorteilhaft ist hierbei, dass die Strommessung unabhängig vom Zustand der in dem Lastkreis direkt oder indirekt enthaltenen Bauelemente ist und das Verfahren somit prinzipiell in der Lage ist, zu jedem Zeitpunkt den Primärstrom zu sensieren, wodurch Schutzfunktionen leicht realisiert werden können.

Zur Messung des Primärstroms kann der Stromwandler auch in den Pfad eines Schalters eingefügt werden. Nachteilig ist hierbei, dass nur bei entsprechend leitendem Schalter oder leitender Diode ein Strom gemessen wird, der dem Primärstrom entspricht. Bei potenzialfreier Strom-Messtechnik kann das Potenzial der Stromauswerte-Elektronik für die Erzeugung des Sekundärsignals im Rahmen der realisierten Isolationsfestigkeit zwischen Primär- und Sekundärstromkreis frei gewählt werden.

Das üblicherweise gewählte Potenzial der Stromauswerte-Elektronik zur Erzeugung des Sekundärstromkreises ist im Allgemeinen in Bezug zu den Potenzialen, zwischen denen die Last geschaltet wird, konstant. Das Potenzial des zur Last führenden Leiters wird aufgrund der schaltenden Betriebsweise des Wechselrichters im Betrieb zwischen verschiedenen Potenzialen hin- und hergeschaltet.

Aufgrund der sich hieraus ergebenden veränderlichen Potenzialdifferenzen zwischen dem Primär- und Sekundär-Stromkreis des Stromwandlers kommt es durch kapazitive Effekte im Wandler zu einem Verschiebungsstrom. Dieser kapazitiv bedingte Strom findet sich in dem Sekundärsignal wieder. Da diese Stromkomponente im Allgemeinen nicht bekannt ist, ergibt sich hieraus ein Messfehler.

Durch geeignete Ansteuerung der Halbbrücken-Konfiguration wird unter Vernachlässigung der Spannungsabfälle an den Leistungsschaltern und Reaktionszeiten ein Potenzial erzwungen, dass dem durch die Ansteuerung gewünschten im Wesentlichen entspricht. Der durch den Wandler fliessende Primärstrom wird in ein galvanisch getrenntes Sekundärsignal abgebildet. Eine Erhöhung der Qualität der Stromsignalerfassung ist anzustreben, um die Steuerung oder Regelung der Last zu verbessern.

Der Erfindung liegt **die Aufgabe zugrunde** ein Verfahren und eine Messvorrichtung zur Messung des Ausgangsstroms einer getakteten Halbbrückenschaltung zu schaffen, welche die Steuerung oder Regelung der Last durch Erhöhung der Qualität der Stromsignalerfassung verbessern, insbesondere eine kapazitiv bedingte Stromkomponente eliminieren.

Diese Aufgabe wird mit einem Verfahren zur Messung des Ausgangsstroms einer getakteten Halbbrückenschaltung gemäß den Merkmalen des Patentanspruchs 1 und mit einer Messvorrichtung mit den Merkmalen des Patentanspruchs 7 gelöst.

Bei der erfindungsgemäßen Lösung wird ein Primärstrom aus der Halbbrücke in die Last durch die Ströme des unteren und oberen Halbbrückenzweigs dargestellt und in vorteilhafter Weise die diesen Strömen entsprechenden Magnetfelder im Wandler superponiert (überlagert).

Mit der erfindungsgemäßen Lösung wird die Messung des Laststroms einer mit Spannungstransienten behafteten Leitung auf die Messung von Teilströmen in Leitungen mit annähernd konstanten Potenzialen gegenüber der Auswerte-Elektronik des Stromwandlers zurückgeführt, so dass eine Reduktion einer kapazitiv bedingten Stromkomponente bei der Strommessung in schaltenden Leistungsstellgliedern erreicht wird.

Der Laststrom als Ausgangsstrom ist der zur Last, bspw. Maschine oder Ofen geführte Strom, kein "Fehlerstrom", wie er durch Erdschleifen gegen Masse/Erde entstehen kann. Letzterer Fehlerstrom erreicht die Last nicht, ist damit auch kein Laststrom als Primärstrom.

Die Stelle (der Ort), von dem die Messung ausgeht, ist unabhängig vom Schaltzustand der Halbleiterschalter in dem jeweiligen Zweig der Halbbrücke, aus dem der Strom als Teilstrom erfasst wird. Die Erfassung erfolgt durch eine Erfassung der Magnetfelder. Diese treten zu nicht gleichen Zeiten auf (Anspruch 6).

Die Messvorrichtung zur Messung des Ausgangsstroms der getakteten Halbbrückenschaltung mit wenigstens zwei Halbbrückenzweigen arbeitet wie folgt und ist ebenso gestaltet (Anspruch 15).

- Der Ausgangsstrom lässt sich durch die Summe der in den Halbbrückenzweigen fließenden Teilströme darstellen;
- Die Potenziale der die Teilströme führenden Leitungen oder Leitungsabschnitte sind gegenüber der Auswerte-Elektronik des Stromwandlers zumindest im Wesentlichen konstant;
- Die Messung des Ausgangsstroms wird auf die Messung der Teilströme mit annähernd konstanten Potenzialen gegenüber der Auswerte-Elektronik eines Stromwandlers durch Superposition der Magnetfelder zurückgeführt;
- Der Ausgangsstrom ist als Summe von Teilströmen abbildbar

$$i_{primär} = \sum_{n=0}^{x-1} i_{primär\_n}$$

- wobei x gleich der Anzahl der unabhängigen Teilströme ist und $i_{primärn\_n}$ den n-ten Teilstrom bezeichnet.

Die Potenziale der Leitungen oder solcher Abschnitte, welche die Teilströme führen, sind gegenüber der Auswerte-Elektronik (praktisch betrachtet) konstant.

- Das Potenzial (von $i_{primär\_n}$) ist gegenüber der Auswerte-Elektronik konstant.
- Im Falle von zwei unabhängigen Teilströmen (x = 2) ergibt sich zu

$$i_{\text{primär}} = i_{\text{primär0}} + i_{\text{primär1}}.$$

Weitere vorteilhafte Ausgestaltungen ergeben sich aus den abhängigen Ansprüchen.

Die Erfindung wird nachfolgend anhand der Zeichnungen an einem Schaltungsbeispiel noch näher erörtert.

**Fig. 1**   ist ein Beispiel eines Schaltungsaufbaus einer erfindungsgemäßen Messvorrichtung mit beispielsweise zwei Schalterpotenzialen.

**Fig. 2**   veranschaulicht den konstruktiven Aufbau eines Beispiels eines Stromwandlers mit zwei Primärstromkreisen.

**In der Figur 1** sind als Beispiel eines Stellglieds zwei Halbleiterschalter T0 und T1 vorgesehen, die bezüglich ihrer stromführenden Anschlüsse in Reihe geschaltet sind. Sie können im Gegentakt wechselweise angesteuert und damit durchgeschaltet oder gesperrt werden. Eine Sperrung beider Schalter ist ebenfalls möglich. Antiparallel zu den Halbleiterschaltern T0 und T1 ist jeweils eine Freilaufdiode D0 und D1 geschaltet. Diese bilden eine getaktete hälftige Brückenschaltung H mit Brückenzweigen oder "Zweigen" (oder: H als Halbbrückenschaltung).

Die "komplementären" Halbleiterschalter T0 und T1 mit den zugehörigen Freilaufdioden D0 und D1 haben einen gemeinsamen Verbindungspunkt B, der einen Anschluss für die - nicht dargestellte - Last darstellt.

Der Halbleiterschalter T0 mit der zugehörigen Freilaufdiode D0 ist mit dem vom Anschluss B entfernten Ende an dem negativen oder niederen Potenzial A0 des Zwischenkreises angeschlossen. Der Halbleiterschalter T1 mit der zugehörigen Freilaufdiode D1 ist mit dem vom Anschluss B entfernten Ende an dem positiven oder höheren Potenzial A1 des Zwischenkreises angeschlossen.

Beide Schalter haben einen Anschluss, der auf einem praktisch konstanten Potenzial liegt, Anschluss C1 von T1 und Anschluss E0 von T0. Die jeweils anderen Anschlüsse E1, C0 sind an dem Knoten B angeschlossen und mit hohen oder starken Spannungstransienten behaftet.

Die Steuereingänge X0 und X1 der Halbleiterschalter T0 und T1 sind mit einer Ansteuereinrichtung verbunden, welche pulsweiten-modulierte Signale an die Steuereingänge anlegt. So werden die Halbleiterschalter T0 und T1 wechselweise gesperrt oder durchgeschaltet. Zur Vermeidung eines Kurzschlusses zwischen den Potenzialen A1 und A0 werden die Schalter T0 und T1 nie gleichzeitig eingeschaltet. Wenn T0 eingeschaltet ist, nimmt der Punkt B annähernd das Potenzial von A0 an. Ist T1 eingeschaltet, nimmt Punkt B annähernd das Potenzial von A1 an. Nach dem Ausschalten eines Schalters wird eine Wartezeit appliziert, bevor der "komplementäre" Schalter eingeschaltet wird (der andere Schalter/Zweig der Halbbrückenschaltung).

Die Strommessvorrichtung umfasst im Wesentlichen einen Stromwandler W zur Messung des vom Verbindungspunkt B zur Last führenden Stromes aufgrund der Auswertung der damit einhergehenden Magnetfelder, so dass ein galvanisch getrenntes und korreliertes Signal erzeugt wird. Diese schematische Darstellung macht sich zunutze, dass

- der Primärstrom $i_{\text{primär}}$ sich als Stromsumme aus dem oberen Strom $i_{\text{primär\_1}}$ und unteren Strom $i_{\text{primär\_0}}$ im Brücken- oder Schalterzweig darstellen lässt und insbesondere
- eine Überlagerung der resultierenden Magnetfelder der beiden Stromkomponenten $i_{\text{primär\_0}}$ und $i_{\text{primär\_1}}$ im Stromwandler W möglich ist.

**Figur 2** veranschaulicht einen Stromwandler W mit zwei Primärstromkreisen. Bekannte Ausführungen sind Wandler, die Primärstromleiter galvanisch getrennt umschließen, wie in Figur 2 dargestellt, oder galvanisch getrennt in geeigneter Orientierung an ihm platziert sind.

Der Primärstrom $i_{\text{primär}}$ kann als Summe der zwischen L und M und zwischen N und O (oder umgekehrt) fließenden Ströme dargestellt werden. Die durch L und M sowie N und O dargestellten Leitungen haben untereinander keine elektrische Verbindung. Die zu sensierenden Ströme in den Leitungen zwischen L-M und N-O dienen nicht einer Kalibrierung des Sensors, sondern der Nachbildung des Primärstroms.

Vorteilhaft ist, dass die Potenziale von L und M denen von A1 entsprechen, sowie die Potenziale von N und O denen von A0 entsprechen.

Da die Potenziale (Spannungen) von UW0 und UW1 im Wesentlichen konstant sind, ergibt sich aufgrund der nun reduzierten Änderungen d UWO/dt und d UW1/dt zwischen Primär- und Sekundärstromkreis des Wandlers ein ebenfalls reduzierter kapazitiver Strom im Wandler gemäß der Kondensatorgleichung $i_c = C * d(u_C)/dt$, wonach der durch eine Kapazität C fließende Strom $i_c(t)$ proportional zur Größe der Kapazität C und der Spannungsänderung pro Zeit d $u_C$/dt ist.

Somit ist das Sekundärsignal S des Wandlers im Wesentlichen nur mit dem Primärstrom korreliert. Die dieses Signal S erzeugende Auswerteschaltung ist nicht gesondert dargestellt.

Vorteilhaft ist, dass sich hiermit die angestrebte Verbesserung der StromsignalErfassung ergibt.

Die Formgebung der Verbindungen ist wählbar, solange die Verbindungen (oder Leitungsabschnitte) L-M und N-O so geschaltet oder gestaltet sind, dass bei gleichem Stromfluss von L zu M bzw. N zu O jeder Leiter für sich das gleiche Sekundärsignal S erzeugt (dies zumindest betragsmäßig).

Die als Einzelleiter dargestellten Verbindungen L-M bzw. N-O können auch als Mehrfachverbindungen ausgeführt sein. Dies kann der Fall sein, wenn nur so der magnetisch aktive Teil des Sensors für die Strommessung genutzt werden kann oder nur so die gewünschte Stromtragfähigkeit erreicht werden kann. Aufgrund der Potenzialdifferenz U10 zwischen den Verbindungen L-M und N-O ist der erforderliche Isolationsabstand einzuhalten.

Durch das Verfahren zur Eliminierung eines Einflusses der Koppelkapazität zwischen Primär- und Sekundärkreis des Wandlers können Leiterabstände, die unter anderem dem Ziel einer Verringerung der Koppelkapazität dienen, verringert werden, sowie Abschirmmaßnahmen im Wandler reduziert werden oder entfallen. Hiermit sind kleinere Bauformen und Kosteneinsparungen realisierbar.

Abhängig von der Anzahl der Potenziale des Wechselrichters, zwischen denen geschaltet wird, können weitere Verbindungen zur Nachbildung des Primärstroms $i_{primär}$ verwendet werden.

### Bezugzeichnungsliste (Auszug).

| | |
|---|---|
| Halbleiterschalter | T0, T1 |
| Freilauf-Dioden | D0, D1 |
| Stromwandler | W |
| Zwischenkreispotenziale | A0, A1 |
| Schalterkonstantpotenziale | E0, C1 |
| Steuersignale | X0, X1 |
| Primärstrom | $i_{primär}$ |
| Primär-Teilströme | $i_{primär0}$, $i_{primär1}$ |
| Gemeinsamer Verbindungspunkt | B |
| Leitungen | L - M und N - O |
| Potenziale, Spannungen | U10, UW0 und UW1 |

### Patentansprüche

1. **Verfahren zum Messen** eines Ausgangsstroms ($i_{primär}$) einer getakteten Halbbrückenschaltung (H) und als Eingangsstrom eines Motors, bei der sich in jedem Halbbrückenzweig ein Halbbrückenschalter (T0;T1) befindet, welche im Gegentakt gesperrt und durchgeschaltet werden, womit in einem Ausgangstromkreis der Ausgangsstrom ($i_{primär}$) als der den Eingangsstrom bildende Primärstrom des Motors erzeugt wird;

   - wobei eine Strommessung über einen Stromwandler (W) vorgenommen wird;
   - die Strommessung des Primärstroms des Motors an einer - Spannungstransiente(n) aufweisenden - Leitung ersetzt wird durch Messung von Teilströmen ($i_{primär\_0}$; $i_{primär\_1}$) an Orten mit annähernd konstanten Potenzialen (UW0;UW1) gegenüber einer Auswerte-Elektronik des Stromwandlers (W) und mit einer Superposition von Magnetfeldern der Teilströme in dem Stromwandler (W), womit sich der Primärstrom des Motors ergibt.

2. Verfahren nach Anspruch 1, wobei sich der Primärstrom ($i_{primär}$) als Stromsumme der Teilströme ($i_{primär\_0}$; $i_{primär\_1}$) der Schalterzweige ergibt und eine Überlagerung der resultierenden Magnetfelder der Teilströme ($i_{primär\_0}$; $i_{primär-1}$) im Stromwandler (W) erfolgt.

3. Verfahren nach Patentanspruch 1 oder 2, wobei die zu sensierenden oder erfassten Teilströme in Leitungen oder Leitungsabschnitten (L-M; N-O) einer Nachbildung des Primärstroms ($i_{primär}$) dienen.

4. Verfahren nach einem der Patentansprüche 1 bis 3, wobei bei der Strommessung ein galvanisch getrenntes und korreliertes Sekundärsignal (S) erzeugt wird.

5. Verfahren nach Anspruch 4, wobei das Sekundärsignal des Stromwandlers (W) mit dem Primärstrom ($i_{primär}$) korreliert ist.

6. Verfahren nach einem der Patentansprüche 1 bis 5, wobei die Messung des vom Verbindungspunkt (B) der Halbbrückenschalter (T1,T0) zu einer Last führenden Primärstroms aufgrund der Auswertung von damit einhergehenden Magnetfeldern durchgeführt wird, insbesondere zweier zeitlich getrennter Magnetfelder.

7. **Messvorrichtung** zur Messung eines Ausgangsstroms ($i_{primär}$) einer getakteten Halbbrückenschaltung (H) mit wenigstes zwei in Halbbrückenzweigen befindlichen und getakteten oder geschalteten Halbleiterschaltern (T1,T0) und mit einem Verbindungsknoten (B), von dem ein Ausgangstromkreis zu einer Last und als Eingangsstrom eines Motors führt,
wobei annähernd konstante Potenziale (C1;E0) der getakteten Halbbrückenschaltung (H) über einen Stromwandler (W) mit bestimmten Zwischenkreispotenzialen (A1; A0) verbunden sind, und mit dem Stromwandler (W) ein galvanisch getrenntes Sekundärsignal erzeugbar ist;

- der Eingangsstrom $i_{primär}$ sich als Stromsumme aus dem oberen Strom $i_{primär\_1}$ und unteren Strom $i_{primär\_0}$ der Halbbrückenschaltung darstellen lässt und
- eine Überlagerung der resultierenden Magnetfelder der beiden Stromkomponenten $i_{primär\_0}$ und $i_{primär\_1}$ im Stromwandler W erfolgt.

8. Messvorrichtung nach Patentanspruch 7, **dadurch gekennzeichnet, dass** eine Auswerteschaltung des Stromwandlers (W) zur Erzeugung des Sekundärsignals (S) annähernd konstante Potenzialdifferenzen (UWO; UW1) zu den Punkten der Zwischenkreispotentiale (A0; A1) hat und sich - gemäß einer Kondensatorgleichung, wonach der durch eine Kapazität fließende Strom ($i_c$) proportional zur Grösse der Kapazität (C) und der Spannungsänderung pro Zeit (d $u_c$/dt) ist - ein reduzierter kapazitiver Strom ergibt.

9. Messvorrichtung nach Patentanspruch 7 oder 8, **dadurch gekennzeichnet, dass** die Strommessung des Ausgangsstroms durch einen magnetisch aktiven Teil des Sensors des Wandlers (W) durchgeführt wird.

10. Messvorrichtung nach einem der Patentansprüche 8 bis 9, **dadurch gekennzeichnet, dass** die Potenzialdifferenzen (UWO; UW1) annähernd konstant sind und sich aufgrund der nun reduzierten Potentialänderung pro Zeitintervall (d UWO/dt und d UW1/dt) zwischen Primär- und Sekundärstromkreis des Stromwandlers ein reduzierter kapazitiver Strom im Stromwandler (W) ergibt.

11. Messvorrichtung nach einem der Patentansprüche 7 bis 10, **dadurch gekennzeichnet, dass** Verbindungsleitungen (L-M; N-O) als Einzelleiter oder Mehrfachverbindungen ausgeführt sind, insbesondere diejenigen zum Stromwandler (W).

12. Messvorrichtung nach Anspruch 11, wobei zwischen den Verbindungen (L-M; N-O) eine Isolation entsprechend der bestehenden Potenzialdifferenz realisiert ist.

13. Messvorrichtung nach einem der Patentansprüche 11 bis 12, **dadurch gekennzeichnet, dass** weitere Verbindungen zur Nachbildung des Primärstroms ($i_{primär}$) von der Anzahl der Potenziale eines Wechselrichters mit dem zumindest einen Halbbrückenzweig abhängig sind.

14. Messvorrichtung nach einem der Patentansprüche 11 bis 13, **dadurch gekennzeichnet, dass** Leiterabstände der Verbindungen (L-M; N-O), die zumindest dem Ziel einer Verringerung der Koppelkapazität dienen, verringert sind.

15. Messvorrichtung nach Patentanspruch 7, wobei die Potenziale der die Teilströme ($i_{primär\_n}$) führenden Leitungen gegenüber dem Potenzial einer Auswerte-Elektronik des Stromwandlers (W) jeweils im Wesentlichen konstant sind.

16. **Messvorrichtung** zur Messung des Ausgangsstroms ($i_{primär}$) einer getakteten Halbbrückenschaltung (H), mit wenigstens zwei Halbbrückenzweigen, nach Patentanspruch 7, wobei der Ausgangstrom ($i_{primär}$) als Summe von Teilströmen erfassbar ist

$$i_{primär} = \sum_{n=0}^{x-1} i_{primär\_n}$$

und wobei x gleich der Anzahl der unabhängigen Teilströme in den Halbbrückenzweigen ist und $i_{primär\_n}$ den n-ten Teilstrom bezeichnet.

**17.** Messvorrichtung nach Patentanspruch 16, wobei die Potenziale der die Teilströme ($i_{primär\_n}$) führenden Leitungen gegenüber dem Potenzial einer Auswerte-Elektronik des Stromwandlers (W) jeweils im Wesentlichen konstant sind.

**Claims**

**1.** **Method for measuring** an output current ($i_{primär}$) of a clocked half bridge circuit (H) and as input current of a motor, wherein there is a half bridge switch (T0; T1) in every half bridge branch which are blocked and connected through in a push-pull mode, whereby the output current ($i_{primär}$) is generated in an output circuit as primary current of the motor forming the input current;

- wherein a current measurement is performed via a current transformer (W);
- the current measurement of the motor primary current is replaced on a line - having voltage transient(s) - by the measurement of partial currents ($i_{primär\_0}$; $i_{primar\_1}$) at locations with approximately constant potentials (UW0; UW1) with respect to evaluation electronics of the current transformer (W) and with a superposition of magnetic fields of the partial currents in the current transformer (W), which results in the motor primary current.

**2.** Method according to claim 1, wherein the primary current ($i_{primär}$) results from the partial currents ($i_{primär\_0}$; $i_{primär\_1}$) of the switch branches as total current and a superposition of the resulting magnetic fields of the partial currents ($i_{primär\_0}$; $i_{primär\_1}$) in the current transformer (W) takes place.

**3.** Method according to patent claim 1 or 2, wherein the partial currents to be sensed or detected in lines or line sections (L-M; N-O) serve a replication of the primary current ($i_{primär}$).

**4.** Method according to one of the patent claims 1 to 3, wherein during current measurement a galvanically isolated and correlated secondary signal (S) is generated.

**5.** Method according to claim 4, wherein the secondary signal of the current transformer (W) is correlated with the primary current ($i_{primär}$).

**6.** Method according to one of the patent claims 1 to 5, wherein the measurement of the primary current leading from the connecting point (B) of the half bridge switches (T1, T0) to a load is carried out on the basis of the evaluation of the related magnetic fields, preferably of two temporarily seperated magnetic fields.

**7.** **Measuring device** for measuring an output current ($i_{primär}$) of a clocked half bridge circuit (H) having at least two clocked or connected semiconductor switches (T1; T0) located in half bridge branches and with a connection node (B), from which an output circuit leads to a load and as input current of a motor, wherein approximately constant potentials (C1; E0) of the clocked half bridge circuit (H) are connected via a current converter (W) with specified intermediate circuit potentials (A1; A0) and a galvanically isolated secondary signal is generatable with the current converter (W); the input current $i_{primär}$ can be represented as current total of the upper current $i_{primär\_1}$ and the lower current $i_{primär\_0}$ of the half bridge circuit and a superposition of the resulting magnetic fields of the two current components $i_{primär\_0}$ and $i_{primär\_1}$ takes place in the current converter W.

**8.** Measuring device according to patent claim 7, **characterized in that** for the generation of a secondary signal (S), an evaluation circuit of the current converter (W) has approximately constant potential differences (UW0; UW1) to the points of the intermediate circuit potentials (A0; A1) and a reduced capacitive current is generated - according to a capacitor equation, wherein the current ($i_c$) flowing through a capacitor is proportional to the amount of the capacity (C) and the change in voltage per time ($d\,u_c/dt$).

**9.** Measuring device according to patent claim 7 or 8, **characterized in that** the current measurement of the output current is performed using a magnetically active part of the converter (W) sensor.

**10.** Measuring device according to one of the patent claims 8 to 9, **characterized in that** the potential differences (UW0; UW1) are approximately constant and the now reduced change in potential per time interval (d UW0/dt and d UW1/dt) between primary and secondary circuit of the current converter results in a reduced capacitive current in the current converter (W).

**11.** Measuring device according to one of the patent claims 7 to 10, **characterized in that** connection lines (L-M; N-O) are designed as single conductors or multiple connections, preferably those leading to the current converter (W).

**12.** Measuring device according to claim 11, wherein between the connections (L-M; N-O) an isolation is realised according to the prevailing potential difference.

**13.** Measuring device according to one of the patent claims 11 to 12, **characterized in that** further connections for the reproduction of the primary current ($i_{primär}$) depend on the number of the potentials of an inverter with the at least one half bridge branch.

**14.** Measuring device according to one of the patent claims 11 to 13, **characterized in that** conductor spacings of the connections (L-M; N-O) serving to at least the aim to reduce coupling capacitance, are reduced.

**15.** Measuring device according to patent claim 7, wherein the potentials of the lines conducting partial currents ($i_{primär\_n}$) in comparison to the potential of evaluation electronics of the current converter (W) substantially are constant.

**16.** **Measuring device** for measuring the output current ($i_{primär}$) of a clocked half bridge circuit (H), with at least two half bridge branches, according to patent claim 7, wherein the output current ($i_{primär}$) is detectable as a total of partial currents

$$i_{primär} = \sum_{n=0}^{x-1} i_{primär\_n}$$

and wherein x is equal to the number of the independent partial currents in the half bridge branches and $i_{primär\_n}$ refers to the n-th partial current.

**17.** Measuring device according to patent claim 16, wherein the potentials of the lines conducting partial currents ($i_{primär\_n}$) in each case are substantially constant in comparison to the potential of evaluation electronics of the current converter (W).

**Revendications**

**1.** Procédé de mesure d'un courant de sortie ($i_{primaire}$) d'un circuit en demi-pont synchronisé (H) et comme courant d'entrée d'un moteur, dans lequel il se trouve dans chaque branche du demi-pont un interrupteur de demi-pont (T0; T1), lesquels interrupteurs de demi-pont sont coupés et branchés en opposition, avec lesquels on produit dans un circuit électrique de sortie le courant de sortie ($i_{primaire}$) comme le courant primaire du moteur formant le courant d'entrée;

- dans lequel on procède à une mesure de courant au moyen d'un transformateur de courant (W);
- on remplace la mesure de courant du courant primaire du moteur sur une ligne - présentant une/des transitoire(s) de tension - par la mesure de courants partiels ($i_{primaire\_0}$; $i_{primaire\_1}$) en des endroits à potentiel approximativement constant (UW0; UW1) par rapport à une électronique d'évaluation du transformateur de courant (W) et avec une superposition de champs magnétiques des courants partiels dans le transformateur de courant (W), ce dont il résulte le courant primaire du moteur.

**2.** Procédé selon la revendication 1, dans lequel le courant primaire ($i_{primaire}$) est obtenu comme la somme des courants partiels ($i_{primaire\_0}$; $i_{primaire\_1}$) des branches à interrupteur et il en résulte une superposition des champs magnétiques résultants des courants partiels ($i_{primaire\_0}$; $i_{primaire\_1}$) dans le transformateur de courant (W) .

**3.** Procédé selon la revendication 1 ou 2, dans lequel les courants partiels à détecter ou détectés dans des lignes ou des parties de ligne (L-M; N-O) servent pour une simulation du courant primaire ($i_{primaire}$).

**4.** Procédé selon l'une quelconque des revendications 1 à 3, dans lequel on produit lors de la mesure de courant un signal secondaire (S) électriquement séparé et corrélé.

**5.** Procédé selon la revendication 4, dans lequel le signal secondaire du transformateur de courant (W) est corrélé au courant primaire ($i_{primaire}$).

**6.** Procédé selon l'une quelconque des revendications 1 à 5, dans lequel on effectue la mesure du courant primaire conduisant du point de connexion (B) des interrupteurs de demi-pont (T1, T0) à une charge sur la base de l'évaluation de champs magnétiques générés par celui-ci, en particulier de deux champs magnétiques temporellement séparés.

**7.** Dispositif de mesure pour la mesure d'un courant de sortie ($i_{primaire}$) d'un circuit en demi-pont synchronisé (H) avec au moins deux interrupteurs à semi-conducteur (T1, T0) se trouvant dans des branches du demi-pont et synchronisés ou connectés et avec un noeud de liaison (B), d'où un circuit électrique de sortie conduit à une charge et comme courant d'entrée d'un moteur,

- dans lequel des potentiels approximativement constants (C1; E0) du circuit en demi-pont synchronisé (H) sont connectés par un transformateur de courant (W) à des potentiels de circuit intermédiaires déterminés (A1; A0), et un signal secondaire électriquement séparé peut être produit avec le transformateur de courant (W);
- le courant d'entrée ($i_{primaire}$) peut être représenté comme la somme de courants formée à partir du courant supérieur $i_{primaire\_1}$ et du courant inférieur $i_{primaire\_0}$ du circuit en demi-pont; et
- il se produit une superposition des champs magnétiques résultants des deux composantes de courant ($i_{primaire\_0}$ et $i_{primaire\_1}$) dans le transformateur de courant (W).

**8.** Dispositif de mesure selon la revendication 7, **caractérisé en ce qu'**un circuit d'évaluation du transformateur de courant (W) a pour la production du signal secondaire (S) des différences de potentiel approximativement constantes (UW0; UW1) aux points des potentiels de circuit intermédiaires (A0; A1) et il en résulte un courant capacitif réduit
- selon une équation de condensateur, selon laquelle le courant circulant à travers un condensateur ($i_c$) est proportionnel à la grandeur du condensateur (C) et à la variation de tension en fonction du temps (d $u_c$/dt).

**9.** Dispositif de mesure selon la revendication 7 ou 8, **caractérisé en ce que** la mesure de courant du courant de sortie est effectuée par une partie magnétiquement active du capteur du transformateur (W).

**10.** Dispositif de mesure selon une des revendications 8 à 9, **caractérisé en ce que** les différences de potentiel (UW0; UW1) sont approximativement constantes et il résulte un courant capacitif réduit dans le transformateur de courant (W) en raison de la variation de potentiel à présent réduite par intervalle de temps (d UW0/dt et d UW1/dt) entre les circuits électriques primaire et secondaire du transformateur de courant.

**11.** Dispositif de mesure selon l'une quelconque des revendications 7 à 10, **caractérisé en ce que** les lignes de connexion (L-M; N-O) sont réalisées sous forme de conducteurs individuels ou de connexions multiples, en particulier celles qui conduisent au transformateur de courant (W).

**12.** Dispositif de mesure selon la revendication 11, dans lequel une isolation correspondant à la différence de potentiel existante est réalisée entre les connexions (L-M; N-O).

**13.** Dispositif de mesure selon une des revendications 11 à 12, **caractérisé en ce que** d'autres connexions destinées à simuler le courant primaire ($i_{primaire}$) dépendent du nombre des potentiels d'un onduleur avec ladite au moins une branche de demi-pont.

**14.** Dispositif de mesure selon l'une quelconque des revendications 11 à 13, **caractérisé en ce que** les distances des conducteurs des connexions (L-M; N-O), qui ont au moins pour objectif une diminution de la capacité de couplage, sont réduites.

**15.** Dispositif de mesure selon la revendication 7, dans lequel les potentiels des lignes transportant les courants partiels ($i_{primaire\_n}$) sont chacun essentiellement constants par rapport au potentiel d'une électronique d'évaluation du transformateur de courant (W).

**16.** Dispositif de mesure pour la mesure du courant de sortie ($i_{primaire}$) d'un circuit en demi-pont synchronisé (H), avec au moins deux branches de circuit en demi-pont, selon la revendication 7, dans lequel le courant de sortie ($i_{primaire}$) est détectable comme la somme de courants partiels

$$i_{primaire} = \sum_{n=0}^{x-1} i_{primaire\_n}$$

et dans lequel x est égal au nombre des courants partiels indépendants dans les branches du demi-pont et $i_{primaire\_n}$ désigne le $n^{ème}$ courant partiel.

17. Dispositif de mesure selon la revendication 16, dans lequel les potentiels des lignes transportant les courants partiels ($i_{primaire\_n}$) sont chacun essentiellement constants par rapport au potentiel d'une électronique d'évaluation du transformateur de courant (W).

$$i_{primaire} = \sum_{n=0}^{x-1} i_{primaire\_n}$$

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4870527 A, Emerson, Zaleski